(19) Europäisches Patentamt
European Patent Office
Office européen des brevets

(11) **EP 3 104 326 A1**

(12) **EUROPEAN PATENT APPLICATION**

(43) Date of publication:
**14.12.2016 Bulletin 2016/50**

(51) Int Cl.:
***G06T 5/00*** *(2006.01)*

(21) Application number: **15305873.0**

(22) Date of filing: **09.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
- **Hoerentrup, Jobst**
  **30974 Wennigsen (DE)**
- **Jachalsky, Joern**
  **30974 Wennigsen (DE)**
- **Schlosser, Markus**
  **76137 Karlsruhe (DE)**

(74) Representative: **Huchet, Anne et al**
**TECHNICOLOR**
**1-5, rue Jeanne d'Arc**
**92130 Issy-les-Moulineaux (FR)**

(54) **METHOD AND APPARATUS FOR SIGNAL FILTERING**

(57)   A method and an apparatus (20) for determining a filter output value for a signal of at least two dimensions are described. A filter output value retrieving unit (24) retrieves (10) previous filter output values associated with previous samples located in at least two directions relative to a current sample. A coefficient determining unit (25) determines (11) feedback coefficients associated with the retrieved previous filter output values using an auxiliary signal and further determines (12) a current coefficient associated with the current sample. A signal filter (26) then determines (13) the filter output value for the current sample from a filter input value for the current sample, the current coefficient, the retrieved previous filter output values, and the determined feedback coefficients.

Fig. 1

**Description**

**FIELD**

The present principles relate to a method and an apparatus for filtering a signal of at least two dimensions, and more specifically to a method and an apparatus for filtering an image using an edge-preserving smoothing filter.

**BACKGROUND**

Edge-preserving smoothing filters (EPSF) have become very popular in recent years. Interesting application scenarios in the field of professional image processing are (inverse) tone mapping and the post-processing of pixel-based estimates, like in alpha matting, disparity estimation and optical flow estimation.

Unfortunately, their straightforward implementation in the form of a (Joint) Bilateral Filter [1, 2] is computationally rather demanding and does not scale favorably with increasing image sizes due to the increased size of the filter kernel.

Recently, two alternative approaches have been presented, which have a very low computational complexity and show an edge-preserving behavior similar to the original Joint Bilateral Filter, although they are no approximate solutions: the Guided Image Filter [3] and the Domain Transform [4].

A drawback of the Guided Image Filter is that it assumes a linear relationship between the desired filter output and the guiding image. If this assumption holds, the resulting so-called "structure transfer" can lead to outstanding performance, like e.g. for alpha matting. However, if the assumption does not hold, it may produce rather surprising results, which have little resemblance to classical filtering.

The Domain Transform is typically even faster than the Guided Image Filter. However, it basically only works for one-dimensional signals. Two-dimensional signals, such as images, need to be processed iteratively by alternating between horizontal and vertical filtering steps. Such an iterative approach does not work well if there are thin structures present in the image, like e.g. for alpha matting. In addition, strong edges block the filtering completely. For some applications this behavior is desirable, but not for others. Both of the above drawbacks are due to the transformation of the problem domain that gives the approach its name.

The Domain Transform builds upon the observation that a color image can be regarded as a 2D manifold in a 5D space, with two spatial coordinates and three colorimetric coordinates, and that edge-preserving smoothing filtering of the 2D image could therefore be carried out with a 5D spatially-invariant kernel, whose response decreases as the distance among pixels increase in 5D. As the advantage of the spatially-invariant filtering would, however, be lost by the high dimensionality of the necessary kernel, the key idea behind the Domain Transform consists in transforming the problem to a lower-dimensional space while preserving the distances between pixels before applying the spatially-invariant low-pass filter.

Unfortunately, such a distance-preserving transformation, i.e. an isometry, only exists for very special 2D manifolds, and even then it requires slow optimization methods to find mere approximations. Therefore, in [4] the authors propose to approximate the two-dimensional filtering of an image by iteratively applying one-dimensional filters to its rows and columns. As the necessary spatially-invariant 1D smoothing filters can be implemented very efficiently, several such iterations may easily be performed while still being orders of magnitudes faster than the original edge-preserving smoothing filtering.

For any 1D signal, it is very simple to define an isometry if only the distance between neighboring samples need to be preserved. This simple transformation can also be implemented very efficiently. The 1D signal is merely warped in such a way that the spacing between adjacent samples is proportional to their colorimetric and spatial distance.

As already indicated, the drawback of this warping is that even thin edges can block the filtering completely. The problem lies in the cumulative nature of the distance calculation while keeping the ordering between samples within one row/column. If the color difference induced by a strong edge pushes two adjacent pixels in the original image to lie so far apart in the warped domain that they basically have no influence on each other, other pixels in their neighborhood on opposite sides of the edge cannot no more influence each other even if they are of exactly the same color.

In many applications, a confidence map accompanies the data to be filtered. A confidence value provides a measure of how reliable an element in the input data is deemed to be. Jachalsky et al. [5] disclose a method that improves the quality of the (Joint) Bilateral's filter output by taking confidence information associated to the filter input into account. Hörentrup and Schlosser disclose similar methods for the Guided Image Filter [6] and for the Domain Transform [7].

**SUMMARY**

The present principles relate to an approach for filtering a signal of at least two dimensions using an edge-preserving smoothing filter.

According to one aspect of the present principles, a method for determining a filter output value for a signal of at least two dimensions comprises:

- retrieving previous filter output values associated with previous samples located in at least two directions relative to a current sample;
- determining feedback coefficients associated with the previous samples using an auxiliary signal;
- determining a current coefficient associated with the current sample; and
- determining the filter output value for the current sample from a filter input value for the current sample, the current coefficient, the retrieved previous filter output values, and the determined feedback coefficients.

Accordingly, a computer readable storage medium has stored therein instructions enabling determining a filter output value for a signal of at least two dimensions, which, when executed by a computer, cause the computer to:

- retrieve previous filter output values associated with previous samples located in at least two directions relative to a current sample;
- determine feedback coefficients associated with the previous samples using an auxiliary signal;
- determine a current coefficient associated with the current sample; and
- determine the filter output value for the current sample from a filter input value for the current sample, the current coefficient, the retrieved previous filter output values, and the determined feedback coefficients.

The computer readable storage medium is a non-transitory volatile or non-volatile storage medium, such as, for example, but not limited to, a hard disk, an optical or magnetic disk or tape, a solid state memory device, etc. The storage medium thus tangibly embodies a program of instructions executable by a computer or a processing device to perform program steps as described herein.

Also, in one embodiment, an apparatus for determining a filter output value for a signal of at least two dimensions comprises:

- a filter output value retrieving unit configured to retrieve previous filter output values associated with previous samples located in at least two directions relative to a current sample;
- a coefficient determining unit configured to determine feedback coefficients associated with the previous samples using an auxiliary signal and to determine a current coefficient associated with the current sample; and
- a signal filter configured to determine the filter output value for the current sample from a filter input value for the current sample, the current coefficient, the retrieved previous filter output values, and the determined feedback coefficients.

In another embodiment, an apparatus for determining a filter output value for a signal of at least two dimensions comprises a processing device and a memory device having stored therein instructions, which, when executed by the processing device, cause the apparatus to:

- retrieve previous filter output values associated with previous samples located in at least two directions relative to a current sample;
- determine feedback coefficients associated with the previous samples using an auxiliary signal;
- determine a current coefficient associated with the current sample; and
- determine the filter output value for the current sample from a filter input value for the current sample, the current coefficient, the retrieved previous filter output values, and the determined feedback coefficients.

The described solution avoids the explicit separation of the processing into a warping and a filtering phase. Instead, a coupling between samples in some neighborhood of a current sample is introduced. As a consequence, both of the above described drawbacks of the Domain Transform can be circumvented. As the coupling is not restricted to samples lying on one line, the filter processes the two or more dimensions of a signal at the same time. For example, the dimensions may be the rows and columns of pixels of an image. In this case the current sample is a pixel of the image. The filter input value for the current sample then is a value associated to this pixel, e.g. its grey value or one or more of its color values.

The capability of processing the two or more dimensions of a signal at the same time is of interest for a variety of filtering applications, e.g. the processing of video sequences. For example, in [8] it is proposed to filter a cost volume instead of the estimated disparity (or optical flow) map. The cost volume is organized such that it forms a stack of "images", where each image represents the cost for one specific (hypothetical) disparity value. The disparity values need to be assumed independent of each other so that each image in the stack can be processed independently using a Guided Image Filter. The present filter allows for a coupling between the different slices in the cost volume.

In one embodiment, the retrieved previous filter output values are associated with samples adjacent to the current sample. The coupling can be defined between adjacent samples, but also between samples that lie further apart. As a consequence, the edge-preserving smoothing filter can be designed so that the filtering is blocked by thin strong edges. These edges may, however, also be required to be of some minimum width. In addition, the calculation of the coupling may not only depend on just those two samples, but on an arbitrary number of samples, e.g. samples lying in-between the two samples for which the coupling is determined.

In one embodiment, the signal is an image and the auxiliary signal is an auxiliary image. For example, the auxiliary image may be a frame from a video sequence and the image one of an alpha matte associated to the auxiliary image, a disparity map associated to the auxiliary image, and an optical flow map associated to the auxiliary image.

In one embodiment, the feedback coefficient associated with a previous sample is determined from at least a distance in color space and a spatial distance between the previous sample and the current sample in the auxiliary image. The stronger the filter feedback coefficient, the larger the smoothing effect.

In one embodiment, upon determining the feedback coefficient associated with a previous filter output value associated with a previous sample a texture of an area of the image centered around the previous sample and a texture of an area of the image centered around the current sample in the auxiliary image are taken into account. To this end the calculation of the color difference is adapted to the amount of texture present in that image area. Use of texture makes the approach rather robust against noise in the auxiliary image.

In one embodiment, upon determining the feedback coefficient associated with a previous filter output value associated with a previous sample a confidence value associated with the previous sample is taken into account. The described edge-preserving smoothing filter can be extended to take confidence values into account in a similar way as in [7]. The confidence values indicate the reliability of the sample-based estimates.

In one embodiment, the image is iteratively filtered using at least two filter passes scanning the image in opposite directions.

BRIEF DESCRIPTION OF THE DRAWINGS

Fig. 1    schematically illustrates an embodiment of a method for determining a filter output value for a signal of at least two dimensions;

Fig. 2    schematically depicts one embodiment of an apparatus for determining a filter output value for a signal of at least two dimensions according to the present principles;

Fig. 3    schematically illustrates another embodiment of an apparatus for determining a filter output value for a signal of at least two dimensions according to the present principles;

Fig. 4    shows a filtering process for an image from the top-left to the bottom-right; and

Fig. 5    shows a filtering process for an image from the bottom-right to the top-left.

DETAILED DESCRIPTION OF PREFERED EMBODIMENTS

For a better understanding the principles of some embodiments shall now be explained in more detail in the following description with reference to the figures. It is understood that the described solution is not limited to these exemplary embodiments and that specified features can also expediently be combined and/or modified without departing from the scope of the present principles as defined in the appended claims.

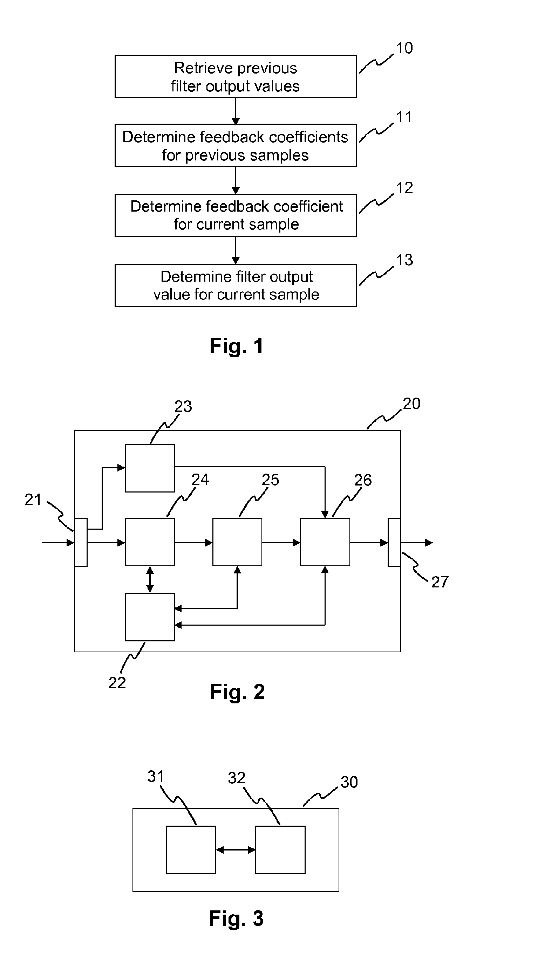

Fig. 1 schematically illustrates one embodiment of a method for determining a filter output value for a signal of at least two dimensions. In a first step previous filter output values associated with previous samples located in at least two directions relative to a current sample are retrieved 10. Then feedback coefficients associated with the previous samples are determined 11 using an auxiliary signal. In a further step a current coefficient associated with the current sample is determined 12. Finally, the filter output value for the current sample is determined 13 from a filter input value for the current sample, the current coefficient, the retrieved previous filter output values, and the determined feedback coefficients.

One embodiment of an apparatus 20 for determining a filter output value for a signal of at least two dimensions according to the present principles is schematically depicted in Fig. 2. The apparatus 20 has an input 21 for obtaining the signal and an auxiliary signal, e.g. from a network or an external storage system. The signal or the auxiliary signal may likewise be obtained from a local storage unit 22. A sampling unit 23 determines a current sample of the input signal and a filter input value for the current sample. A filter output value retrieving unit 24 retrieves 10 previous filter output values associated with previous samples located in at least two directions relative to the current sample. A coefficient determining unit 25 determines 11 feedback coefficients associated with the previous samples using the auxiliary signal and further determines 12 a current coefficient associated with the current sample. A signal filter 26 then determines 13 the filter output value for the current sample from the filter input value for the current sample, the current coefficient, the retrieved previous filter output values, and the determined feedback coefficients. The filter output value is preferably made available via an output 27. It may also be stored on the local storage unit 22. The output 27 may also be combined with the input 21 into a single bidirectional interface. Each of the different units 23, 24, 25, 26 can be embodied as a different hardware unit. Of course, the different units 23, 24, 25, 26 may likewise be fully or partially combined into a single unit or implemented as software running on a processor. Also, the coefficient determining unit 25 may be separated into units, one for determining 11 the feedback coefficients associated with the previous samples using the auxiliary signal and another one for determining 12 the current coefficient associated with the current sample.

Another embodiment of an apparatus 30 for determining a filter output value for a signal of at least two dimensions according to the present principles is schematically illustrated in Fig. 3. The apparatus 30 comprises a processing device 31 and a memory device 32 storing instructions that, when executed, cause the apparatus to perform steps according to one of the described methods.

For example, the processing device 31 can be a processor adapted to perform the steps according to one of the described methods. In an embodiment said adaptation comprises that the processor is configured, e.g. programmed, to perform steps according to one of the described methods.

A processor as used herein may include one or more processing units, such as microprocessors, digital signal processors, or a combination thereof.

The local storage unit 22 and the memory device 32 may include volatile and/or non-volatile memory regions and storage devices such as hard disk drives and DVD drives. A part of the memory is a non-transitory program storage device readable by the processing device 31, tangibly embodying a program of instructions executable by the processing device 31 to perform program steps as described herein according to the present principles.

In the following the present principles are described in greater detail with an emphasis on image filtering, i.e. the signal of at least two dimensions is an image. Nonetheless, the present principles are broadly applicable to other types of signals, e.g. video data.

In [4] three alternative implementations are proposed for filtering the non-uniformly sampled, one-dimensional signal obtained by the transformation: Normalized Convolution, Recursive Filtering, and Interpolated Convolution. The filter described herein is inspired by the Recursive Filtering version. For this version of the Domain Transform, the filter output is computed as:

$$J_n = v_n J_{n-1} + (1 - v_n)I_n , \qquad (1)$$

where I denotes the input signal subject to the filtering and *J* the filtered signal. The index n is the sample index of the one-dimensional row/column signal. An interesting element to consider is $v_n$, i.e. the feedback coefficient.

In a typical spatially-invariant, recursive low-pass filter of order one, the feedback coefficient would simply be a constant in the interval [0, 1]: $v_n = a$. To cope with the non-uniform spacing of the signal samples in the case of the Domain Transform, the feedback coefficient is adjusted according to the distance $d_n$ between adjacent samples:

$$v_n = a^{d_n} , \qquad (2)$$

where

$$d_n = ct(x_n) - ct(x_{n-1}) \qquad (3)$$

and ct(...) denotes the domain transform. The smaller the distance between neighboring samples, the stronger the filter feedback and the larger the smoothing effect.

In the case of a greyscale image, the distance $d_n$ between adjacent samples in the transformed domain is basically a weighted sum of the chromatic distance and the spatial distance of these two samples in the original domain:

$$d_n = ct'(x) = 1 + \frac{\sigma_s}{\sigma_r}|I'(x)|.\qquad(4)$$

In the formula the parameters $\sigma_s$ and $\sigma_r$ are constants similar to those known from bilateral filtering, where $\sigma_s$, defines the spatial kernel and $\sigma_r$ defines the domain kernel. $I'$ designates the gradient of the image.

According to the present principles, the transformation of the signal domain in a pre-processing step is omitted. Instead, the distance $d_n$ is calculated directly. This can be seen as defining a coupling $v_n$ between the two adjacent samples $x_n$ and $x_{n-1}$.

Viewing it this way, such a coupling may not only be defined between adjacent samples but between any samples, any number of samples, and in any dimension. The distance $d_n$ is also not restricted to the chromatic plus spatial distance between the two samples. There is basically no restriction at all in its calculation. It could also be the geodesic distance or a mixture of the two, e.g. in order to only reduce the filtering but not to block it completely in the presence of strong thin edges or severe outliers. Finally, the calculation of the color difference could also be adapted to the amount of texture present in that image area etc.

As these $N_{FB}$ feedback points can lie anywhere with respect to the current sample $x_{current}$, they can be named with a simple index $i$ so that

$$J_{current} = w_{current}I_{current} + \sum_i v_i J_i ,\qquad(5)$$

where $w_{current}$ is a current coefficient and $v_i$ are feedback coefficients. The signal $J$ may now be of two or more dimensions, like e.g. the original image. Correspondingly, every index $i$ also corresponds to an $N$-dimensional vector pointing to the position of the feedback point.

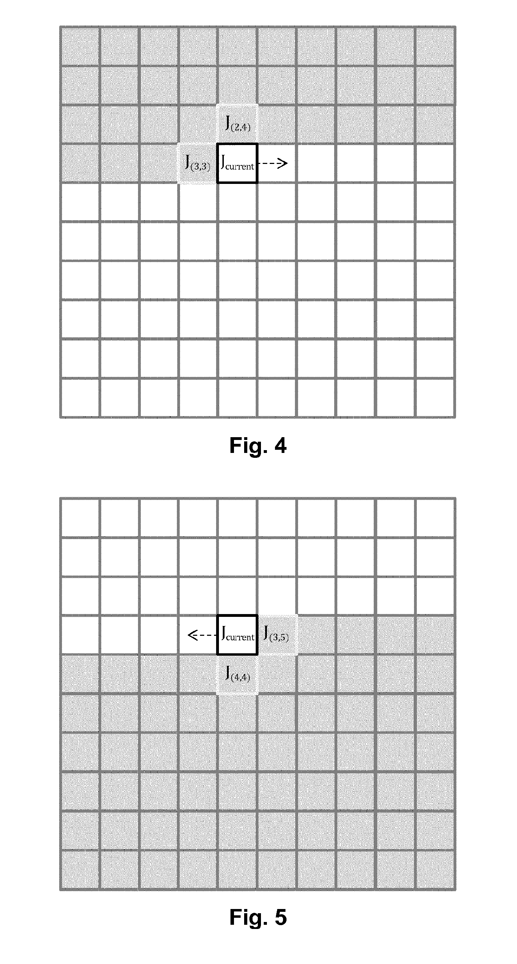

For a recursive filter, the feedback points merely need to lie in the "past". To facilitate the spreading of information, an iterative filtering scheme is preferably used where, in the case of simple images, filter passes from the top-left to the bottom-right are alternated with filter passes from the bottom-right to the top-left. This is illustrated in Fig. 4, which shows a filtering process from the top-left to the bottom-right as indicated by the arrow. Fig. 5 shows filter passes for the counter-direction. In both figures grey pixels indicate the set of "past" pixels. The current filtering position in $J$ ($J_{current}$) is marked by a black border. In this illustrated case, two "past" pixels have been chosen for the filtering that lie in a distance of 1 to the current pixel. These are marked by light grey borders.

To avoid stability issues, a weighted average may be used, i.e.

$$w_n + \sum_i v_i = 1 .\qquad(6)$$

As none of these weights are allowed to become negative, the original feedback coefficients need to be reduced. The simplest possibility would be to divide every feedback coefficient by the total number of feedback points: $v_i = \frac{a^{d_i}}{N_{FB}}$.

Alternatively, the underlying classical feedback coefficient(s) a could also be reduced, some dimensions given more weight than others, etc.

The described filter can also benefit from confidence values, which indicate the reliability of every sample-based estimate. When confidence values are available, the processing is again split into two processing steps. In the first step the accumulated confidence of the feedback points are determined. In the second step, these accumulated confidence values are used to determine the correct weighting between the various feedback points and the current sample.

For this purpose it is advantageous if there is only one feedback point per dimension, like e.g. the previous sample in the same row as well as the same/corresponding sample in the previous row. This avoids the problem of reusing information. If there was more than one feedback point in one dimension, the filter result at the "newer" feedback point would already have been obtained based on the information provided by the "older" feedback point. Without special mechanisms in place, the information of the "older" feedback point would then simply be used twice in filtering the current estimate, as if it was completely new information. Therefore, the current estimate would be regarded as if it was based on more information than it actually is and, consequently, its reliability overestimated, manifesting in a too high confidence value. In the end, this would lead to a too high weight of all feedback points compared with the current estimate. Finally, the amount of overestimation would build up due to the recursive nature of the processing. If there is only one feedback point per dimension, the confidence in the filtered estimates can be accumulated (per dimension) as described in [6]. However, the accumulated confidence for every pixel is preferably reset to zero before each new filtering pass.

## REFERENCES

[1] Tomasi et al.: "Bilateral Filtering for Gray and Color Images", ICCV '98 Proceedings of the Sixth International Conference on Computer Vision (1998), pp. 839-846.

[2] Petschnigg et al.: "Digital Photography with Flash and No-Flash Image Pairs", ACM Transactions on Graphics (TOG), Vol. 23 (2004), Proceedings of SIGGRAPH 2004, pp. 664-672.

[3] He et al.: "Guided Image Filtering", IEEE Transactions on Pattern Analysis and Machine Intelligence, Vol. 35 (2013), pp. 1397-1409.

[4] Gastal et al.: "Domain Transform for Edge-Aware Image and Video Processing", ACM Transactions on Graphics (TOG), Vol. 30 (2011), Proceedings of SIGGRAPH 2011, Article 69.

[5] Jachalsky et al.: "Confidence Evaluation for Robust, Fast-Converging Disparity Map Refinement", IEEE International Conference on Multimedia and Expo (ICME) 2010, pp. 1399-1404.

[6] Horentrup et al.: "Confidence-aware Guided Image Filter", IEEE International Conference on Image Processing (ICIP) 2014, pp. 3243-3247.

[7] European Patent Application 14306869.0.

[8] Rhemann et al.: "Fast Cost-Volume Filtering for Visual Correspondence and Beyond", IEEE Conference on Computer Vision and Pattern Recognition (CVPR) 2011, pp. 3017-3024.

**Claims**

1. A method for determining a filter output value for a signal of at least two dimensions, the method **comprising:**

   - retrieving (10) previous filter output values associated with previous samples located in at least two directions relative to a current sample;
   - determining (11) feedback coefficients associated with the previous samples using an auxiliary signal;
   - determining (12) a current coefficient associated with the current sample; and
   - determining (13) the filter output value for the current sample from a filter input value for the current sample, the current coefficient, the retrieved previous filter output values, and the determined feedback coefficients.

2. The method according to claim 1, **wherein** the retrieved (10) previous filter output values are associated with samples adjacent to the current sample.

3. The method according to claim 1 or 2, **wherein** the signal is an image and the auxiliary signal is an auxiliary image.

4. The method according to claim 3, **wherein** the image is one of an alpha matte associated to the auxiliary image, a disparity map associated to the auxiliary image, and an optical flow map associated to the auxiliary image.

5. The method according to claim 3 or 4, **wherein** the auxiliary image is a frame from a video sequence.

6. The method according to one of claims 3 to 5, **wherein** the feedback coefficient associated with a previous sample is determined (11) from at least a distance in color space and a spatial distance between the previous sample and the current sample in the auxiliary image.

7. The method according to claim 6, **wherein** for determining (11) the feedback coefficient associated with a previous sample a texture of an area centered around the previous sample and a texture of an area centered around the current sample in the auxiliary image are taken into account.

8. The method according to claim 6, **wherein** for determining (11) the feedback coefficient associated with a previous sample a confidence value associated with the previous sample is taken into account.

9. The method according to one of claims 3 to 8, **wherein** the image is iteratively filtered using at least two filter passes scanning the image in opposite directions.

10. A computer readable storage medium having stored therein instructions enabling determining a filter output value for a signal of at least two dimensions, which, when executed by a computer, cause the computer to:

   - retrieve (10) previous filter output values associated with previous samples located in at least two directions relative to a current sample;
   - determine (11) feedback coefficients associated with the previous samples using an auxiliary signal;
   - determine (12) a current coefficient associated with the current sample; and
   - determine (13) the filter output value for the current sample from a filter input value for the current sample, the current coefficient, the retrieved previous filter output values, and the determined feedback coefficients.

11. An apparatus (20) for determining a filter output value for a signal of at least two dimensions, the apparatus (20) **comprising:**

   - a filter output value retrieving unit (24) configured to retrieve (10) previous filter output values associated with previous samples located in at least two directions relative to a current sample;
   - a coefficient determining unit (25) configured to determine (11) feedback coefficients associated with the previous samples using an auxiliary signal and to determine (12) a current coefficient associated with the current sample; and
   - a signal filter (26) configured to determine (13) the filter output value for the current sample from a filter input value for the current sample, the current coefficient, the retrieved previous filter output values, and the determined feedback coefficients.

12. An apparatus (30) for determining a filter output value for a signal of at least two dimensions, the apparatus (30) comprising a processing device (31) and a memory device (32) having stored therein instructions, which, when executed by the processing device (31), cause the apparatus (30) to:

   - retrieve (10) previous filter output values associated with previous samples located in at least two directions relative to a current sample;
   - determine (11) feedback coefficients associated with the previous samples using an auxiliary signal;
   - determine (12) a current coefficient associated with the current sample; and
   - determine (13) the filter output value for the current sample from a filter input value for the current sample, the current coefficient, the retrieved previous filter output values, and the determined feedback coefficients.

```
┌─────────────────────────┐
│   Retrieve previous     │  ╱╲  10
│   filter output values  │ ╱  ╲
└─────────────────────────┘
            │
            ▼
┌─────────────────────────┐
│ Determine feedback      │  ╱╲  11
│ coefficients            │ ╱  ╲
│ for previous samples    │
└─────────────────────────┘
            │
            ▼
┌─────────────────────────┐
│ Determine feedback      │  ╱╲  12
│ coefficient             │ ╱  ╲
│ for current sample      │
└─────────────────────────┘
            │
            ▼
┌─────────────────────────┐
│   Determine filter      │  ╱╲  13
│   output value          │ ╱  ╲
│   for current sample    │
└─────────────────────────┘
```

**Fig. 1**

**Fig. 2**

**Fig. 3**

Fig. 4

Fig. 5

Europäisches
Patentamt

European
Patent Office

Office européen
des brevets

# EUROPEAN SEARCH REPORT

**Application Number**

EP 15 30 5873

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | EP 1 107 181 A2 (EASTMAN KODAK CO [US]) 13 June 2001 (2001-06-13)<br>* abstract *<br>* paragraph [0001] *<br>* paragraph [0013] - paragraph [0015] *<br>* paragraph [0038] - paragraph [0040] *<br>* paragraph [0058] - paragraph [0060] *<br>* paragraph [0065] *<br>* paragraph [0073] - paragraph [0075] *<br>* figures 8A-4, 8D, 9, 11, 15 *<br>----- | 1-3,6,7,<br>9-12<br>4,5<br>8 | INV.<br>G06T5/00 |
| Y | RANK K ET AL: "AN ADAPTIVE RECURSIVE 2-D FILTER FOR REMOVAL OF GAUSSIAN NOISE IN IMAGES",<br>IEEE TRANSACTIONS ON IMAGE PROCESSING,<br>IEEE SERVICE CENTER, PISCATAWAY, NJ, US,<br>vol. 1, no. 3, 1 July 1992 (1992-07-01),<br>pages 431-436, XP000367721,<br>ISSN: 1057-7149, DOI: 10.1109/83.148617<br>* abstract *<br>* Section I. Introduction;<br>page 431, right-hand column *<br>* third paragraph;<br>page 431, right-hand column; figure 1 *<br>----- | 1-12 | |
| | | | **TECHNICAL FIELDS SEARCHED (IPC)**<br><br>G06T |
| | -/-- | | |

The present search report has been drawn up for all claims

| Place of search | Date of completion of the search | Examiner |
|---|---|---|
| Munich | 10 March 2016 | Rusu, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 5873

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KAIMING HE ET AL: "Guided Image Filtering", IEEE TRANSACTIONS ON PATTERN ANALYSIS AND MACHINE INTELLIGENCE, vol. 35, no. 6, 1 June 2013 (2013-06-01), pages 1397-1409, XP055256301, USA ISSN: 0162-8828, DOI: 10.1109/TPAMI.2012.213 * abstract * * last paragraph; page 1397, right-hand column * * first full paragraph; page 1398, left-hand column * * Section 3 Guided filter; page 1399 - page 1400; figure 1 * ----- | 1-4,6,7, 9-12 | |
| Y | ASMAA HOSNI ET AL: "Temporally Consistent Disparity and Optical Flow via Efficient Spatio-temporal Filtering", 1 January 2012 (2012-01-01), ADVANCES IN IMAGE AND VIDEO TECHNOLOGY, SPRINGER BERLIN HEIDELBERG, BERLIN, HEIDELBERG, PAGE(S) 165 - 177, XP019170128, ISBN: 978-3-642-25366-9 | 5 | |
| A | * abstract * * last full paragraph; page 167 * * Section 2.2 Spatio-temporal cost volume smoothing; page 169 - page 170 * ----- | 1-4,6-12 | TECHNICAL FIELDS SEARCHED (IPC) |

-/--

The present search report has been drawn up for all claims

| Place of search | Date of completion of the search | Examiner |
|---|---|---|
| Munich | 10 March 2016 | Rusu, Alexandru |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................
& : member of the same patent family, corresponding
    document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JACHALSKY J ET AL: "Confidence evaluation for robust, fast-converging disparity map refinement", MULTIMEDIA AND EXPO (ICME), 2010 IEEE INTERNATIONAL CONFERENCE ON, IEEE, PISCATAWAY, NJ, USA, 19 July 2010 (2010-07-19), pages 1399-1404, XP031761528, ISBN: 978-1-4244-7491-2 | 8 | |
| A | * abstract * * Section 4. Disparity map refinement; page 1402 - page 1403 * ----- | 1-7,9-12 | |
| A | US 2007/286519 A1 (FRIEDRICH ROLAND [DE]) 13 December 2007 (2007-12-13) * abstract * * figures 2-7 * * paragraph [0019] - paragraph [0020] * * paragraph [0030] - paragraph [0036] * * paragraph [0040] - paragraph [0041] * * paragraph [0044] - paragraph [0051] * ----- | 1-12 | |

**TECHNICAL FIELDS SEARCHED (IPC)**

The present search report has been drawn up for all claims

| Place of search | Date of completion of the search | Examiner |
|---|---|---|
| Munich | 10 March 2016 | Rusu, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5873

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2016

| Patent document cited in search report | | Publication date | Patent family member(s) | | Publication date |
|---|---|---|---|---|---|
| EP 1107181 | A2 | 13-06-2001 | DE | 60026925 T2 | 05-04-2007 |
| | | | EP | 1107181 A2 | 13-06-2001 |
| | | | JP | 2001229377 A | 24-08-2001 |
| | | | US | 6728416 B1 | 27-04-2004 |
| US 2007286519 | A1 | 13-12-2007 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 14306869 A

### Non-patent literature cited in the description

- **TOMASI et al.** Bilateral Filtering for Gray and Color Images. *ICCV '98 Proceedings of the Sixth International Conference on Computer Vision,* 1998, 839-846
- **PETSCHNIGG et al.** Digital Photography with Flash and No-Flash Image Pairs. *Proceedings of SIGGRAPH 2004,* 2004, vol. 23, 664-672
- **HE et al.** Guided Image Filtering. *IEEE Transactions on Pattern Analysis and Machine Intelligence,* 2013, vol. 35, 1397-1409
- **GASTAL et al.** Domain Transform for Edge-Aware Image and Video Processing. *Proceedings of SIGGRAPH 2011,* 2011, vol. 30
- **JACHALSKY et al.** Confidence Evaluation for Robust, Fast-Converging Disparity Map Refinement. *IEEE International Conference on Multimedia and Expo,* 2010, 1399-1404
- **HORENTRUP et al.** Confidence-aware Guided Image Filter. *IEEE International Conference on Image Processing,* 2014, 3243-3247
- **RHEMANN et al.** Fast Cost-Volume Filtering for Visual Correspondence and Beyond. *IEEE Conference on Computer Vision and Pattern Recognition,* 2011, 3017-3024